# EUROPEAN PATENT SPECIFICATION

(11) **EP 0 410 344 B1**
(45) Date of publication and mention of the grant of the patent: **08.10.1997**
(21) Application number: 90114072.3
(22) Date of filing: 23.07.1990
(51) Int. Cl.: H04M 1/274

(54) **Apparatus and method for control of storing information into dial memories in a telephone set**
Gerät und Verfahren zur Kontrolle der Aufnahme von Informationen in die Wahlspeicher eines Telefonapparats
Appareil et procédé pour contrôler l'enregistrement d'information dans les mémoires de numérotation d'un poste téléphonique

(30) Priority: 24.07.1989 JP 188806/89
(43) Date of publication of application: 30.01.1991
(73) Proprietor: NEC CORPORATION, Tokyo (JP)
(72) Inventor: Koma, Noriko, c/o NEC Corporation, Tokyo (JP)
(74) Representative: VOSSIUS & PARTNER

(56) References cited:
- DE-A- 3 410 569
- DE-A- 3 410 579
- DE-A- 3 522 107
- US-A- 4 243 845
- PATENT ABSTRACTS OF JAPAN vol. 13, no. 323 (E-791)21 July 1989 & JP-A-1 090 654
- PATENT ABSTRACTS OF JAPAN vol. 9, no. 99 (E-311)27 April 1985 & JP-A-59 225 696
- PATENT ABSTRACTS OF JAPAN vol. 13, no. 343 (E-796)2 August 1989 & JP-A-1 101 052

## Description

This invention relates to an apparatus for control of storing information into dial memories in a telephone set, and more particularly to, a control apparatus for avoiding an unintentional erasing of information stored in dial memories in a telephone set.

One type of a conventional apparatus for control of storing information into dial memories in a telephone set which is installed, for instance, in a car comprises a central processing unit (CPU), a read only memory (ROM) for storing a program, dial memories of a random access memory (RAM) having addresses designated by memory numbers, a key input unit for supplying the control unit with instruction by an operator, and a liquid crystal display (LCD) for displaying information stored in the dial memories.

In operation, when information such as a telephone number, a person's name, etc. is supplied from the key input unit to the control unit together with a memory number by an operator, an address of the dial memories designated by the memory number is accessed to check whether or not any information is stored in the addressed memory. If information is stored therein, the information is displayed on the LCD. Where the operator considers that the information may be erased, because it is not important, an erasing key provided on the key input unit is pressed on by the operator. Then, information supplied from the key input unit is written on the information stored in the addressed memory, so that the newly supplied information is stored in the addressed memory, while the formerly stored information is erased therefrom. On the other hand, where the operator considers the displayed information to be important, so that the operator does not want that the stored information is erased, the erasing key is not pressed on. Consequently, the important information is avoided from the erasing thereof.

Otherwise, when it is detected that no information is stored in the addressed memory, the newly supplied information is stored in that memory without any erasing key operation.

However, the conventional apparatus for control of storing information into dial memories in a telephone set has a disadvantage in that it is difficult to reliably avoid the erasing of important information, because erasing of any information (including writing of information on information to be erased) is carried out equally, regardless of the importance of stored information. In other words, information is written into dial memories equally, regardless of the importance of information to be stored. In order to surely avoid an erroneous erasing of important information, it is necessary that a memory number, by which a specific memory is designated to store important information, is always remembered. This is an additional disadvantage in the conventional apparatus for control of storing information into dial memories in a telephone set. In addition, even if the memory number is precisely remembered, the important information may be erased due to erroneous operation of a key on the key input unit. This is a further disadvantage.

JP-A-59-225 696 discloses a key telephone set for eliminating the accidental erasure of an existing memory by detecting the storage state of a memory area section to be written. JP-A-1-090 654 discloses a communication terminal equipment for attaining information registration and deletion by discriminating whether opposite party information included in a control information is coincident with the registration information or not.

It is an object of this invention to provide an apparatus for control of storing information into dial memories in a telephone set, in which important information is reliably avoided to be erased.

It is a further object of this invention to provide an apparatus for control of storing information into dial memories in a telephone set, in which it is not necessary to remember a memory number in avoiding an erroneous erasing of important information.

It is a still further object of this invention to provide an apparatus for control of storing information into dial memories in a telephone set, in which important information is not erased, even if a key is erroneously pressed on.

These objects are solved by the features of the claims.

This invention will be explained in more detail in conjunction with appended drawings, wherein:
Fig. 1 is a block diagram showing a conventional apparatus for control of storing information into dial memories in a telephone set;
Fig. 2 is a flow chart showing operation in the conventional apparatus for control of storing information into dial memories in a telephone set;
Fig. 3 is a block diagram showing an apparatus for control of storing information into dial memories in a telephone set in a preferred embodiment according to the invention; and
Fig. 4 is a flow chart showing operation in the preferred embodiment according to the invention.

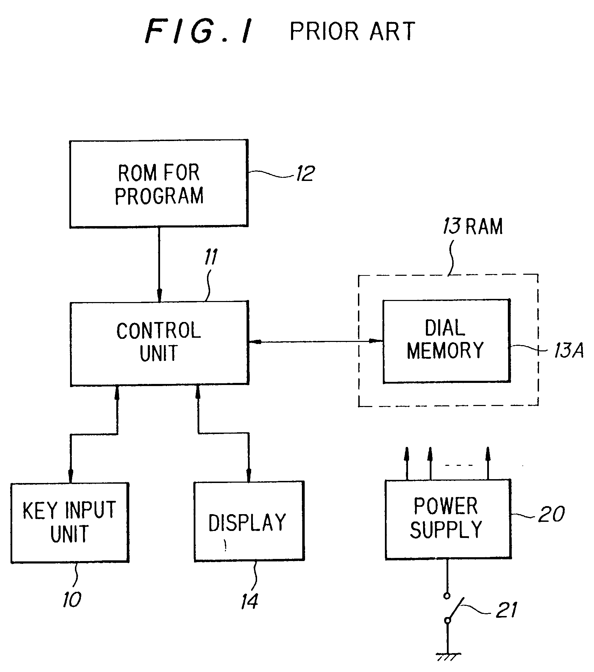

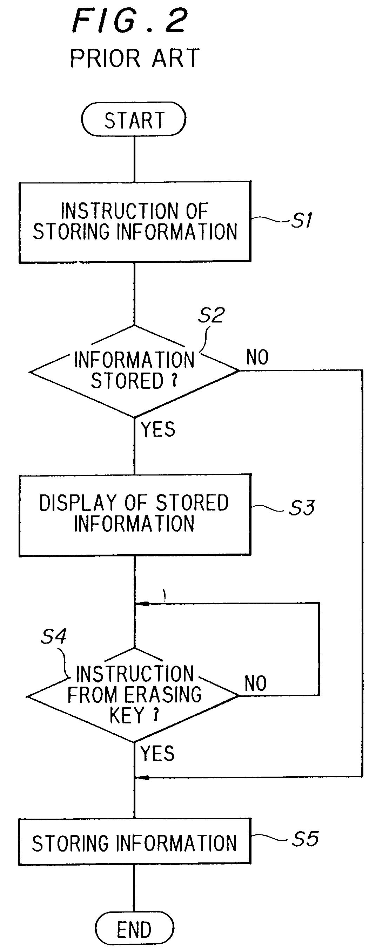

Before explaining an apparatus for control of storing information into dial memories in a telephone set in the preferred embodiment according to the invention, the aforementioned conventional apparatus for control of storing information into dial memories in a telephone set will be again explained in Figs. 1 and 2.

Fig. 1 shows the conventional apparatus which comprises a key input unit 10, a control unit 11, a ROM 12, a RAM 13 for dial memories 13A, an LCD 14, and a power supply 20 having a switch 21. The key input unit includes ten key buttons, etc., such that various instructions such as storing information into the dial memories 13A, erasing information stored in the dial memories 13A, etc. are supplied from the key input unit to the control unit 11. The dial memories 13A have a predetermined number of addresses designated by memory numbers of, for instance, "1" to "99". In the control unit 11, the instructions are processed by a program stored in the ROM 12, so that the dial memories 13A are controlled for writing and erasing of information. The LCD 14 is also controlled by the control unit 11, so that information stored in the dial memories 13A is displayed on the LCD 14.

Fig. 2 shows operation carried out by control of the control unit 11. At a step S1, an instruction of storing information including a telephone number and a person's name is supplied from the key input unit 10 to the control unit 11 by an operator. Simultaneously, a memory number, by which one of the dial memories 13A is addressed for writing of the information, is supplied to the control unit 11. At a step S2, it is checked whether or not information has been stored in the addressed memory of the dial memories 13A. Where information has been stored in the addressed memory (YES at the step S2), the stored information is displayed on the LCD 14 at a step S3. Then, the control unit 11 determines whether or not a key for erasing the stored information is pressed on by the operator at a step S4. When the key is detected to be pressed on (YES at the step S4), the supplied information is written on the stored information in the addressed memory at a step S5, so that the formerly stored information is erased to be replaced by the supplied information. On the other hand, where information has not been stored in the addressed memory (NO at the step S2), the supplied information is written to be stored therein at the step S5. As clearly understood from this operation, all information stored in the dial memories 13A is erased equally by pressing the erasing key on, regardless of the importance of the stored information. Therefore, the aforementioned disadvantages occur in the conventional apparatus for control of storing information into dial memories in a telephone set.

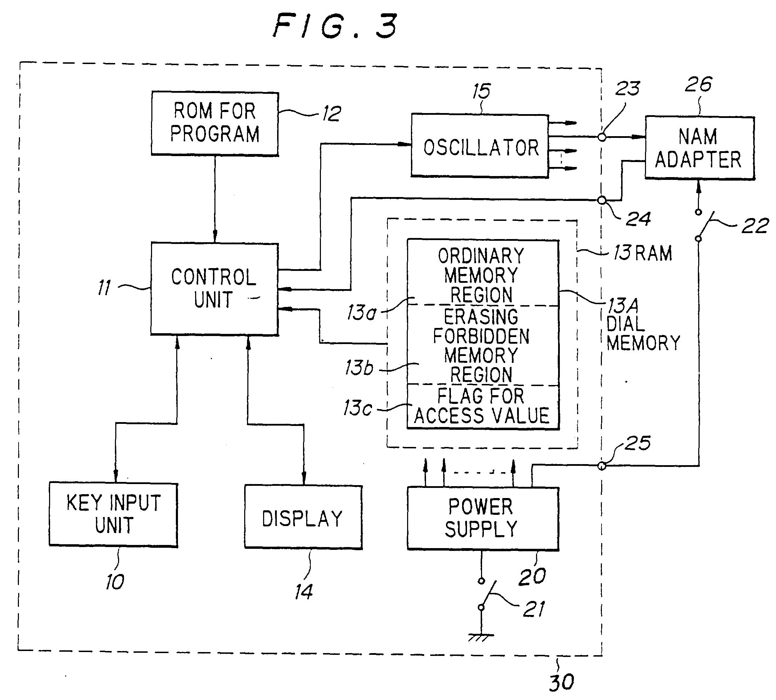

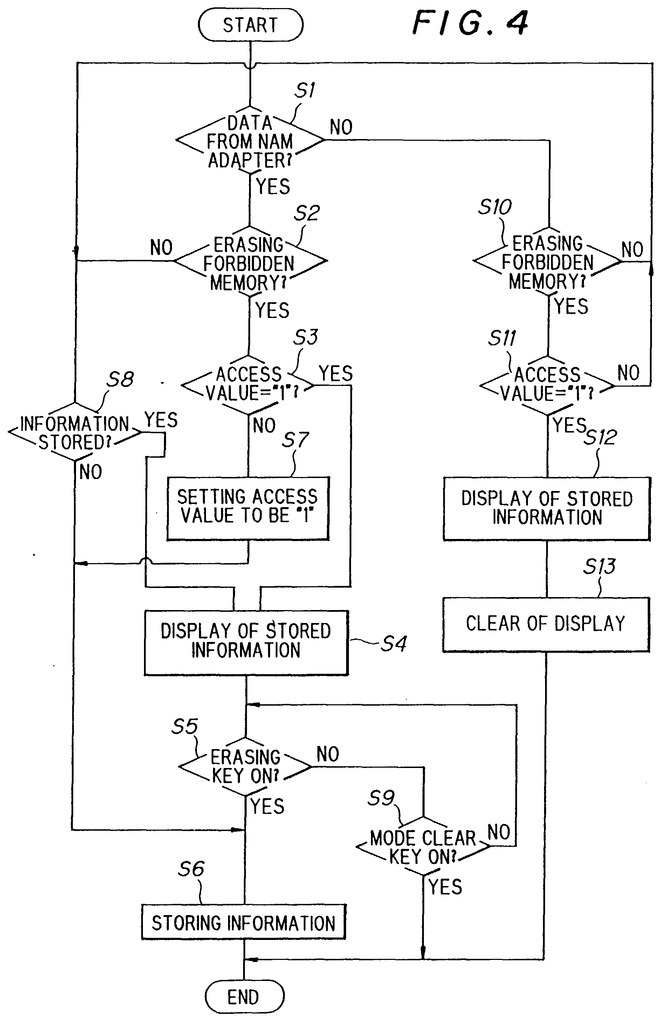

Next, an apparatus for control of storing information into dial memories in a telephone set in the preferred embodiment will be explained in Figs. 3 and 4.

Fig. 3 shows the apparatus for control of storing information into dial memories in a telephone set which comprises a key input unit 10, a control unit 11, a program ROM 12, a RAM 13 including dial memories 13A, an LCD 14, an oscillator 15 for generating a clock signal, a power supply 20 having a switch 21, and a NAM (Number Assignment Module) adapter 26. In this preferred embodiment, like parts are indicated by like reference numerals as used in Fig. 1. The key input unit 10, the control unit 11, the program ROM 12, the dial memories 13A, the LCD 14, and the oscillator 15 are included in a main unit 30 of a telephone set which is installed, for instance, in a car, and the NAM adapter 26 is connected to and disconnected from the main unit 30 by interfaces 23 and 24, and a power supply connector 25. The dial memories 13A have an ordinary memory region 13a, for instance, of 70 memories, an erasing forbidden memory region 13b, for instance, of 30 memories, and a flag region 13c for access value, and the NAM adapter 26 includes a sequence circuit (not shown) for generating a predetermined serial signal in synchronism with the clock signal supplied through the interface 23 from the oscillator 15, and a switch 22 which is turned on to receive an electric power from the power supply 20. Otherwise, the NAM adapter 26 may have an exclusive power supply instead of receiving an electric power from the power supply 20.

In operation, the NAM adapter 26 is connected to the main unit 30, and the switches 21 and 22 are turned on, for instance, at a car dealer factory. At first, a predetermined key operation is carried out on the key input unit 10 by an operator, so that instruction of storing information including a telephone number and a person's name, and a memory number designating a memory in the erasing forbidden memory region 13b are supplied from the key input unit 10 to the control unit 11. Simultaneously, a predetermined serial signal is supplied from the NAM adapter 26 through the interface 24 to the control unit 11 in synchronism with a clock signal supplied through the interface 23 from the oscillator 15. In the control unit 11, the predetermined serial signal is checked as to whether or not it coincides with a correct signal.

Fig. 4 shows this operation at a step S1. When the predetermined signal coincides with the correct signal, the memory number which is supplied from the key input unit 10 is checked as to whether or not it corresponds to an address of a memory in the erasing forbidden memory region 13b at a step S2. When the memory number corresponds to the memory address, an access value of a flag corresponding to the designated memory is checked as to whether or not the access value is "1" in the flag region 13c at a step S3. Here, it is defined that, where an access value is "1" in a flag, information is stored in a memory corresponding to the flag. While, information is not stored in a memory, when an access value is "0" in a flag corresponding to the memory.

In the result of checking the access value at the step S3, information stored in the addressed memory is displayed on the LCD 14 at a step S4. Then, the operator presses an erasing key of the key input unit 10 on at a step S5, when the stored (displayed) information is not important, so that it may be erased. As a result, the supplied information is written on the stored information in the addressed memory, so that the new information is stored therein, in place of the formerly stored information which is automatically erased at a step S6.

At the step S3, when the access value is not "1", that is, the access value is "0", the access value is set to be "1" in the corresponding flag of the flag region 13c at a step S7. Then, the supplied information is stored in the addressed memory of the erasing forbidden memory region 13b having no information at the step S6.

On the other hand, when a dial memory addressed by the memory number does not belong to the erasing forbidden memory region 13b, but to an ordinary memory region 13a at the step S2, it is checked as to whether or not information is stored in the addressed memory at a step S8. When information is stored in the addressed memory, it is displayed at the step S4, and the newly supplied information is stored in the addressed memory at the step S6 in accordance with "YES" at the step S5. Otherwise, information is not stored in the addressed memory at the step S8, the newly supplied information is stored in the addressed memory having no information at the step S6.

When the erasing key is not pressed on in accordance with the importance of the stored information at the step S5, it is checked as to whether or not a mode clear key of the key input unit 10 is pressed on at a step S9. When this mode clear key is pressed on at this step S9, the operation finishes without storing the newly supplied information, so that the information which has been stored in the addressed memory of the ordinary memory region 13a or the erasing forbidden memory region 13b is maintained therein. Otherwise, when the mode clear key is not pressed on at the step S9, a state "WAIT" continues at the step S5.

In this manner, predetermined information is written into dial memories of the ordinary memory region 13a and the erasing forbidden memory region 13b to be stored therein, for instance, at the car dealer factory. Especially, important information is stored in dial memories of the erasing forbidden memory region 13b.

Then, a car will be delivered to a user in a state that the NAM adapter is disconnected from the main unit 30.

In accordance with information including a telephone number and a person's name, and a memory number, respectively, supplied from the key input unit 10, for instance, by the car user, operation starts as explained in Fig. 4. In the state that the NAM adapter is not connected to the main unit 30, a predetermined serial signal is no longer supplied from the NAM adapter 26 to the control unit 11. Therefore, "NO" is met at the step S1. Then, a dial memory which is addressed by the memory number is checked as to whether or not the addressed memory belongs to the erasing forbidden memory region 13b at a step S10. When the addressed memory is not a dial memory in the erasing forbidden memory region 13b, operation following the aforementioned step S8 starts. Otherwise, when the addressed memory is a dial memory in the erasing forbidden memory region 13b, an access value of a flag corresponding to the addressed memory is checked in the flag region 13c as to whether or not the access value is "1" at a step S11. When the access value is "1" in this check, information which has been stored in the addressed memory is displayed on the LCD 14 at a step S12, and then cleared after a limited duration to definitely forbid the writing of the supplied information at a step S13. Consequently, the information stored in the addressed memory is completely avoided to be erased, for instance, by the car user. At the step S11, when the access value is not "1", that is, no information is stored in the addressed memory, operation following the aforementioned step S8 starts.

In this preferred embodiment, where dial memories 13A are composed of nonvolatile memories such as EPROM (Erasable and Programmable Read Only Memory), etc., contents of the dial memories 13A are held, even if a power supply for a telephone set is turned off. The above explained operation is summarized as follows.

| NAM ADAPTER 26 | ORDINARY MEMORY 13a | | ERASING FORBIDDEN MEMORY 13b | |
|---|---|---|---|---|
| | INFORMATION STORED | NO INFORMATION STORED | ACCESS VALUE = 1 | ACCESS VALUE = 0 |
| ON | ERASABLE BY KEY | WRITABLE | ERASABLE BY KEY | WRITABLE |
| OFF | SAME AS ABOVE | SAME AS ABOVE | IMPOSSIBLE TO ERASE STORED INFORMATION | SAME AS ABOVE |

## Claims

1. An apparatus for control of storing information into dial memories in a telephone set, comprising:
dial memories (13A) each having a memory number, said dial memories (13A) comprising an ordinary memory region (13a), an erasing forbidden memory region (13b), and a flag region (13c);
means for detecting a predetermined serial signal to coincide with a correct signal, said predetermined serial signal being supplied from an external unit (26) in synchronism with a clock signal generated in an oszillator (15);
means (10) for input of said memory number designating a memory selected from said dial memories (13A), and of information to be stored into said selected memory; and
means (11) for controlling said information to be stored into said selected memory, when said predetermined serial signal coincides with said correct signal;
wherein said selected memory is controlled by said control means (11), so that information stored in said selected memory is erasable in the presence of said predetermined serial signal, thereby storing said information supplied from said input means, and said information stored in said selected memory is forbidden from erasing in the absence of said predetermined serial signal, thereby forbidding writing of said information supplied from said input means (10), whereby an access value of a flag corresponding to the selected memory is checked as to whether or not information is stored in the memory corresponding to said flag.

2. An apparatus according to claim 1, wherein:
said dial memories (13A), said input means (10), and said control means (11) are included in a main unit (30) of said telephone set; and
said external unit (26) is connectable to said main unit (30) to supply said predetermined serial signal to said control means (11).

3. An apparatus as claimed in claim 1 or 2, wherein said memory regions (13a, 13b) store first and second data, respectively, said first data being erased in response to an erasing signal irrespective of said predetermined serial signal, said second data being not erased in the absence of said predetermined serial signal.

4. An apparatus according to claim 1, 2 or 3, wherein:
said input means (10) includes an erasing key for erasing said information stored in said selected memory.

5. An apparatus according to any one of claims 1 to 4, further comprising:
means (14) for displaying said information stored in said selected memory which is erased to be replaced by said information supplied from said input means (10).

6. An apparatus as claimed in any one of claims 1 to 5, wherein said dial memories comprise an EPROM.

7. A method of preventing data stored in a memory from being erased, comprising the following steps of:
detecting a generated predetermined serial signal;
detecting a memory region of said memory;
checking the access value of said memory dependent on said detected memory region;
forbidding data stored in said memory from being erased in the lack of said predetermined serial signal although access to said memory exists.

8. A method as claimed in claim 7 , wherein said predetermined serial signal is generated in response to a generated serial clock.

## Patentansprüche

1. Vorrichtung zur Steuerung der Informationsspeicherung in Wahlspeichern eines Telefonapparats mit:
Wahlspeichern (13A) mit jeweils einer Speichernummer, wobei die Wahlspeicher (13A) eine normale Speicherregion (13a), eine löschverbotsbehaftete Speicherregion (13b) und eine Flagregion (13c) aufweisen;
einer Einrichtung zum Detektieren eines vorbestimmten seriellen Signals, um mit einem Korrigiersignal zusammenzufallen, wobei das vorbestimmte serielle Signal von einer externen Einheit (26) synchron zu einem Taktsignal zugeführt wird, das in einem Oszillator (15) erzeugt wird;
einer Einrichtung (10) zur Eingabe der Speichernummer als Bezeichnung eines aus den Walspeichern (13A) ausgewählten Speichers und von in dem ausgewählten Speicher zu speichernden Informationen; und
einer Einrichtung (11) zum Steuern der in dem ausgewählten Speicher zu speichernden Informationen, wenn das vorbestimmte serielle Signal mit dem Korrigiersignal zusammenfällt;
wobei der ausgewählte Speicher durch die Steuereinrichtung (11) so gesteuert wird, daß in dem ausgewählten Speicher gespeicherte Informationen bei Vorhandensein des vorbestimmten seriellen Signals löschbar sind, wodurch die von der Eingabeeinrichtung zugeführten Informationen gespeichert werden, und die in dem ausgewählten Speicher gespeicherten Informationen bei Fehlen des vorbestimmten seriellen Signals löschverbotsbehaftet sind, wodurch ein Schreiben der von der Eingabeeinrichtung (10) zugeführten Informationen verboten ist, wobei ein Zugriffswert eines dem ausgewählten Speicher entsprechenden Flags daraufhin geprüft wird, ob Informationen in dem dem Flag entsprechenden Speicher gespeichert sind.

2. Vorrichtung nach Anspruch 1, wobei:
die Wahlspeicher (13A), die Eingabeeinrichtung (10) und die Steuereinrichtung (11) zu einer Haupteinheit (30) des Telefonapparats gehören; und
die externe Einheit (26) mit der Haupteinheit (30) verbunden werden kann, um das vorbestimmte serielle Signal zu der Steuereinrichtung (11) zu führen.

3. Vorrichtung nach Anspruch 1 oder 2, wobei die Speicherregionen (13a, 13b) erste bzw. zweite Daten speichern, die ersten Daten als Reaktion auf ein Löschsignal ungeachtet des vorbestimmten seriellen Signals gelöscht werden und die zweiten Daten bei Fehlen des vorbestimmten seriellen Signals nicht gelöscht werden.

4. Vorrichtung nach Anspruch 1, 2 oder 3, wobei:
die Eingabeeinrichtung (10) eine Löschtaste zum Löschen der in dem ausgewählten Speicher gespeicherten Informationen aufweist.

5. Vorrichtung nach einem der Ansprüche 1 bis 4, ferner mit:
einer Einrichtung (14) zum Anzeigen der in dem ausgewählten Speicher gespeicherten Informationen, die gelöscht werden, um durch die von der Eingabeeinrichtung (10) zugeführten Informationen ersetzt zu werden.

6. Vorrichtung nach einem der Ansprüche 1 bis 5, wobei die Wahlspeicher einen EPROM aufweisen.

7. Verfahren zum Verhindern des Löschens von in einem Speicher gespeicherten Daten mit den folgenden Schritten:
Detektieren eines erzeugten vorbestimmten seriellen Signals;
Detektieren einer Speicherregion des Speichers;
Prüfen des Zugriffswerts des Speichers in Abhängigkeit von der detektierten Speicherregion;
Verbieten, daß in dem Speicher gespeicherte Daten bei Fehlen des vorbestimmten seriellen Signals gelöscht werden, obwohl Zugriff auf den Speicher vorhanden ist.

8. Verfahren nach Anspruch 7, wobei das vorbestimmte serielle Signal als Reaktion auf einen erzeugten seriellen Takt erzeugt wird.

## Revendications

1. Appareil pour contrôler l'enregistrement d'information dans les mémoires de numérotation d'un appareil téléphonique, comprenant :
des mémoires de numérotation (13A) ayant chacune un numéro de mémoire, ces mémoires de numérotation (13A) comprenant une zone de mémoire ordinaire (13a), une zone de mémoire à effacement interdit (13b), et une zone indicateur (13c) ;
des moyens de détection d'un signal série prédéterminé pour coïncider avec un signal correct, ledit signal série prédéterminé étant fourni par une unité externe (26) simultanément à un signal d'horloge généré dans un oscillateur (15) ;
des moyens (10) pour entrer ledit numéro de mémoire désignant une mémoire sélectionnée parmi lesdites mémoires de numérotation (13A), et l'information à enregistrer dans ladite mémoire sélectionnée ; et
des moyens (11) de commande de cette information à enregistrer dans ladite mémoire sélectionnée, lorsque ledit signal série prédéterminé coïncide avec ledit signal correct ;
dans lequel ladite mémoire sélectionnée est commandée par lesdits moyens de commande (11), de sorte que l'information enregistrée dans ladite mémoire sélectionnée est effaçable en présence dudit signal série prédéterminé, enregistrant ainsi ladite information fournie par lesdits moyens d'entrée, et ladite information enregistrée dans ladite mémoire sélectionnée ne doit pas être effacée en l'absence dudit signal série prédéterminé, interdisant ainsi l'écriture de ladite information fournie par lesdits moyens d'entrée (10), auquel cas une valeur d'accès d'un indicateur correspondant à la mémoire sélectionnée est vérifiée pour savoir si l'information est ou n'est pas enregistrée dans la mémoire correspondant à cet indicateur.

2. Appareil selon la revendication 1, dans lequel :
lesdites mémoires de numérotation (13A), lesdits moyens d'entrée (10), et lesdits moyens de commande (11) sont compris dans une unité centrale (30) dudit poste téléphonique ; et
ladite unité externe (26) peut être connectée à ladite unité centrale (30) pour fournir ledit signal série prédéterminé aux moyens de commande (11).

3. Appareil selon la revendication 1 ou 2, dans lequel lesdites zones de mémoire (13a, 13b) enregistrent des premières et des deuxièmes données, respectivement, lesdites premières données étant effacées en réponse à un signal d'effacement indépendamment dudit signal série prédéterminé, lesdites deuxièmes données n'étant pas effacées en l'absence de ce signal série prédéterminé.

4. Appareil selon la revendication 1, 2 ou 3, dans lequel :
ledit moyen d'entrée (10) comprend une touche d'effacement pour effacer ladite information enregistrée dans ladite mémoire sélectionnée.

5. Appareil selon l'une quelconque des revendications 1 à 4, comprenant en outre :
des moyens (14) d'affichage de ladite information enregistrée dans ladite mémoire sélectionnée qui est effacée pour être remplacée par ladite information fournie par ledit moyen d'entrée (10).

6. Appareil selon l'une quelconque des revendications 1 à 5, dans lequel lesdites mémoires de numérotation comprennent une mémoire EPROM (mémoire morte programmable électriquement).

7. Procédé visant à empêcher l'effacement de données enregistrées dans une mémoire, comprenant les étapes suivantes de :
détection d'un signal série généré prédéterminé ;
détection d'une zone de mémoire de ladite mémoire ;
vérification de la valeur d'accès de ladite mémoire dépendant de ladite zone de mémoire détectée ;
d'interdiction d'effacer les données enregistrées dans ladite mémoire en l'absence dudit signal série prédéterminé bien que l'accès à ladite mémoire existe.

8. Procédé selon la revendication 7, dans lequel ledit signal série prédéterminé est généré en réponse à une horloge série générée.
